# EUROPEAN PATENT SPECIFICATION

(11) **EP 2 363 656 B1**
(45) Date of publication and mention of the grant of the patent: **03.05.2017**
(21) Application number: 11154932.5
(22) Date of filing: 18.02.2011
(51) Int. Cl.: F24F 7/06, F24F 13/02, F24F 11/00

(54) **Method for presetting a central ventilation system, presetting system and central ventilation system comprising a presetting system of this type**
Verfahren zur Einstellung vor einer zentralen Lüftungsanlage, Voreinstellung und zentrale Lüftungsanlage mit einer Voreinstellung System dieser Art.
Méthode de pré réglage d'un système central de ventilation, système de préréglage et le système central de ventilation comprenant un système de préréglage de ce type.

(30) Priority: 24.02.2010 BE 201000123
(43) Date of publication of application: 07.09.2011
(73) Proprietor: Renson Ventilation NV, 8790 Waregem (BE); Renson, Paul, 9771 Nokere (Kruishoutem) (BE)
(72) Inventor: Losfeld, Frederik Ronny Willy, 8790 Waregem (BE); Dekeyzer Dieter Lodewijk, 8200 Sint-Andries (BE)
(74) Representative: Ostyn, Frans

(56) References cited:
- DE-U1-202004 010 819
- FR-A1- 2 179 517
- FR-A1- 2 805 601
- FR-A1- 2 914 401
- NL-C- 1 036 988

## Description

The present invention firstly relates to a method for presetting a central ventilation system for ventilating two or more spaces of a building, comprising one or several ventilators and two or more supply and/or discharge ducts for supplying or discharging air to or from these spaces, in which two or more supply and/or discharge ducts comprise a valve and/or flow controller for each supply or discharge duct, in which the maximum ventilation capacity for each supply or discharge duct is set with a valve and/or flow controller by setting the maximum passage opening of the valve and/or the flow controller.

In addition, the present invention relates to a presetting system for presetting a central ventilation system, in which this ventilation system comprises one or several ventilators and two or more supply and/or discharge ducts for supplying or discharging air, in which two or more supply and/or discharge ducts comprise one valve and/or flow controller for each supply or discharge duct, in which case the maximum ventilation capacity for each supply or discharge duct can be set by means of a valve or flow controller by setting the maximum passage opening of the valve and/or flow controller.

Finally, the present invention relates to a central ventilation system comprising a presetting system of this type.

There are various ways of ventilating dwellings or other types of buildings using ventilators, with the two systems described below being the most important ones in this context.

A first system is a central mechanical extraction system (also referred to as a C system), in which the air is actively discharged from the dwelling. However, the supply of air takes place in a passive manner in this case. To this end, the windows are usually provided with ventilation grilles or cantilever windows which are in communication with the outside air. With such a mechanical ventilation system, a special ventilation motor sucks air out of the humid spaces, such as the kitchen, the bathroom and the toilet, via air ducts and ventilation grilles.

A second system is a central mechanical ventilation system (also referred to as a D system), in which air is mechanically supplied from and discharged to the outside. In most cases, these are high efficiency ventilation systems. A heat-recovery unit in such a central ventilation system uses heat from the discharged air in order to partly heat the air supplied from the outside before this is passed into the spaces.

More and more often, flow controllers are provided in each supply and/or discharge duct of such central ventilation systems in order to be able to adjust the air flow rate based on the requirement or demand. This air flow rate may, for example, be adjusted based on the presence or absence of people, or based on air parameters, such as the CO₂ content of the air, the relative humidity, the temperature of the air, etc.

In an increasing number of countries, the maximum capacity (in m³/h or l/s or h⁻¹) of air which is supplied to the spaces to be ventilated and/or the maximum capacity of air which is discharged is determined by law, based on the type of space, the volume or the floor surface of the respective space.

In Belgium, these maximum ventilation capacities for dwellings are laid down in the Belgian standard NBN D 50-001. In the Netherlands, they are laid down in the Building Decree.

With such a central ventilation system, this maximum ventilation capacity can be set in various ways. However, in practice, there are still no effective presetting methods or presetting systems to enable this maximum ventilation capacity to be set accurately and preferably automatically.

On the one hand, attempts are being made to set this maximum ventilation capacity by means of the one or several ventilators of this ventilation system. However, as these one or several ventilators usually affect the flow rate in several of the supply and/or discharge ducts, it is very difficult or, in some cases, even impossible to set the maximum ventilation capacity for each space accurately in this manner.

Often, an additional valve or grille is provided for each supply or discharge duct as an alternative for presetting the maximum ventilation capacity for each supply or discharge duct, and is placed in a fixed position when presetting the ventilation system, corresponding to this maximum ventilation capacity. However, the positions to be preset are difficult to determine accurately. Initially, these valves are set in a theoretically determined position which corresponds to the maximum ventilation capacity to be set. In practice, however, due to pressure losses in the system, the set maximum ventilation capacity will in this way always deviate from the maximum ventilation capacity to be set. By means of measurements, repeated attempts will be made to adjust this set maximum ventilation capacity until it approaches the maximum ventilation capacity to be set more accurately. To this end, the actual maximum ventilation capacity is measured for each supply or discharge duct and then adjusted slightly towards the maximum ventilation capacity to be set. However, as soon as the position of one of the valves of the supply or discharge ducts is regulated, this also affects the maximum ventilation flow rate of the other valves in the other supply or discharge ducts, so that these may again deviate further from the maximum ventilation capacity to be set. Accurately setting the valve or grille positions is therefore a time-consuming and labourious operation.

In addition, there are also valves in which the valve position automatically adjusts according to the pressure difference across the valve. In this way, a more or less constant flow rate is achieved across a certain pressure range. The drawback of such valves is their limited accuracy and the need for a certain pressure range across the valve.

Ventilation systems already exist in which this maximum ventilation capacity is set by setting the maximum valve position for each flow controller manually or by means of software. When using software, the maximum open position for each flow controller can be determined based on the required ventilation capacity of the space to be ventilated and based on the pressure losses across the entire ventilation system. In this case as well, the set maximum ventilation capacity at the set valve position will, in practice, always deviate from the maximum ventilation capacity which is actually to be set due to uncertainties regarding the calculation of the pressure loss. In this case as well, repeated attempts will be made by means of measurements to adjust the maximum valve position until it more accurately corresponds to the maximum ventilation capacity to be set. A central ventilation system according to the preamble of claim 1 is known from FR 2 914 401A1. The object of the present invention is to provide a method by means of which the valve position to be set which corresponds to the maximum ventilation capacity to be set can be determined more accurately, so that the maximum ventilation capacity can be set more accurately.

This object of the invention is achieved by a method for presetting a central ventilation system for ventilating two or more spaces of a building comprising one or several ventilators and two or more supply and/or discharge ducts for supplying or discharging air to or from these spaces, in which two or more supply and/or discharge ducts comprise a flow controller for each supply or discharge duct, in which this flow controller has an adjustable passage opening, in which the maximum ventilation capacity for each supply or discharge duct is set by setting the maximum passage opening of the flow controller, and in which this method comprises the following steps:
a. setting the flow controllers at various passage openings and performing measurements of the total supply and discharge flow of the ventilation system at said various passage openings of the flow controllers;
b. determining the maximum passage opening to be set for each flow controller on the basis of these measurements;
c. setting the determined maximum passage opening for each flow controller.

By setting the passage opening to be set on the basis of measurements of the total supply or discharge flow of the actual ventilation system with its actual pressure losses, it is possible to determine the passage opening to be set for each flow controller much more accurately than on the basis of a theoretical characterisation of this ventilation system using theoretically determined pressure losses. In this way, it is therefore also possible to achieve a much more accurate setting of the maximum ventilation capacity for each flow controller.

Preferably, with a method according to the present invention each flow controller at each measurement in step a is either in an open position, in which said flow controller allows a maximum flow to pass through, or in a closed position, in which said flow controller allows a minimum leakage flow to pass through. The set of comparisons from which the required characteristics of the duct network of the ventilation system can be gathered in order to determine the passage openings to be set becomes significantly simpler.

Preferably, in step a, furthermore at least one measurement is carried out, with at least two flow controllers being in their open position in which these allow a maximum flow to pass through.

Still more preferably, in step a, at least one measurement is carried out with all flow controllers being in their open position, in which these allow a maximum flow to pass through.

In order to ensure a greater degree of accuracy in the determination of the passage openings which correspond to the maximum ventilation capacity to be set, the number of measurements which is carried out in step a is preferably at least one greater than the number of flow controllers.

Prior to step a, the nominal flow for each flow controller is preferably determined and said nominal flow is imposed for each flow controller.

Furthermore, prior to step a, the pressure level of the one or several ventilators is preferably set to a certain pressure level.

In order to further increase the accuracy of the determination of the passage openings which correspond to the maximum ventilation capacity to be set, following step a, the pressure level of the one or several ventilators is preferably set to a different pressure level and step a is repeated. If several measuring points with a higher or lower pressure level are taken into account, a more accurate result can be achieved. If the number of measurements in the successively performed steps a is chosen to be identical, a correct approximation of the maximum passage openings to be set will be achieved by averaging.

More specifically, with a method according to the present invention, in step b, the flow coefficients C for each flow controller corresponding to the nominal flow are calculated on the basis of the measurements performed and the passage opening to be set for each flow controller is determined on the basis of these flow coefficients.

Furthermore, following step c, the required pressure level of the one or several ventilators is preferably determined on the basis of the measurements and the pressure level of the one or several ventilators is set to this required pressure level.

The reason why this pressure level is preferably chosen to be as low as possible is to ensure a minimal consumption of the ventilation system, which is however sufficiently high to be able to guarantee the maximum ventilation capacity. On the basis of the measurements, it will be more readily possible to choose this pressure level based on the consumption and the maximum ventilation capacity to be guaranteed than based on a characterization of the ventilation system which has been determined theoretically beforehand.

This required pressure level is preferably determined on the basis of the calculated flow coefficients.

With the measurements in step a, the total supply or discharge flow with a specific embodiment of a method according to the present invention can be determined on the basis of the capacity and the pressure level of the one or several ventilators.

The object of the present invention is furthermore also achieved by providing a presetting system for presetting a central ventilation system for ventilating two or more spaces of a building, this ventilation system comprising one or several ventilators and two or more supply and/or discharge ducts for supplying or discharging air to or from these spaces, in which two or more supply and/or discharge ducts comprise a flow controller for each supply or discharge duct, in which this flow controller has an adjustable passage opening, in which case the maximum ventilation capacity for each supply or discharge duct can be set by setting the maximum passage opening of the flow controller, and in which said presetting system comprises a measuring device in order to measure the total supply or discharge flow of the ventilation system, comprises control means for setting the maximum passage opening for each flow controller and comprises a calculation unit for calculating the flow coefficients for each flow controller on the basis of measurements of the total supply or discharge flow at different positions of the flow controllers.

A preferred embodiment of a presetting system according to the present invention is suitable for presetting the central ventilation system according to a method according to the present invention as described above, the measuring device being designed to carry out the measurements from step a and designed to pass on measured values to the calculation unit, the control means being designed to change the passage openings during step a in between the measurements, the calculation unit being designed to carry out step b with the aid of the measured values and being designed to pass on set values for setting the maximum passage opening for each flow controller to the control means and the control means being designed to carry out step c with the aid of the set values.

Finally, the object of the present invention is also achieved by providing a central ventilation system for ventilating two or more spaces of a building comprising one or several ventilators and one or several supply and/or discharge ducts for supplying or discharging air to or from these spaces, in which two or more supply or discharge ducts comprise a flow controller for each supply or discharge duct, in which this flow controller has an adjustable passage opening, in which the maximum ventilation capacity for each supply or discharge duct can be set by setting the maximum passage opening of the flow controller, in which this ventilation system comprises a presetting system according to the present invention as described above.

The present invention will now be explained in more detail by means of the following detailed description of some preferred embodiments of a method, a presetting system and a central ventilation system according to the present invention. The purpose of this description is solely to provide illustrative examples and to indicate further advantages and features of this method, this presetting system and this central ventilation system, and can therefore not be interpreted as a limitation of the area of application of the invention or of the patent rights defined in the claims.

In this detailed description, reference numerals are used to refer to the attached drawings, in which:

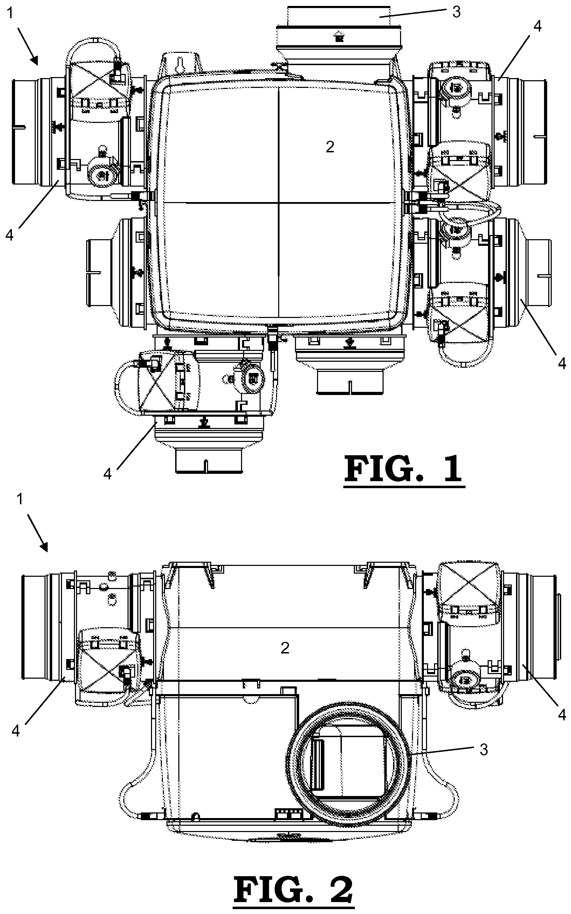

- ***Fig. 1*** shows a front view of a ventilation element of an embodiment of a central ventilation system;
- ***Fig. 2*** shows a top view of a ventilation element as illustrated in Fig. 1;
- ***Fig. 3*** shows a side view of a ventilation element as illustrated in Fig. 1;
- ***Fig. 4*** shows a perspective side view of a flow controller of a ventilation element from Fig. 1.

Firstly, an embodiment of a central ventilation system for ventilating two or more spaces in a building, as illustrated in the figures, is provided with a ventilation element (1). This ventilation element (1) comprises a ventilator housing (2) in which a ventilator (not shown in the figure) is provided. In this case, this ventilator is electrically controlled by means of a central electronic processing unit which, in this case, is situated in the ventilator housing (2). The ventilator housing (2) is provided with a central opening (3) for discharging air from the ventilation element (1) to an external environment or for supplying air from an external environment to the ventilation element (1). If air is to be discharged and supplied, then two of such openings (3) have to be provided. Furthermore, the ventilator housing (2) is provided with various second openings, each of which is designed to be brought into communication with a supply or discharge duct.

Secondly, the central ventilation system is provided with a duct system which has not been illustrated in the figures, comprising various supply and/or discharge ducts which are, on one hand, in communication with said ventilation element (1) and, on the other hand, end in a respective space of the building, and which are designed to either supply outside air by means of the ventilation element (1) to a space or to discharge air from a space to the outside by means of the ventilation element (1).

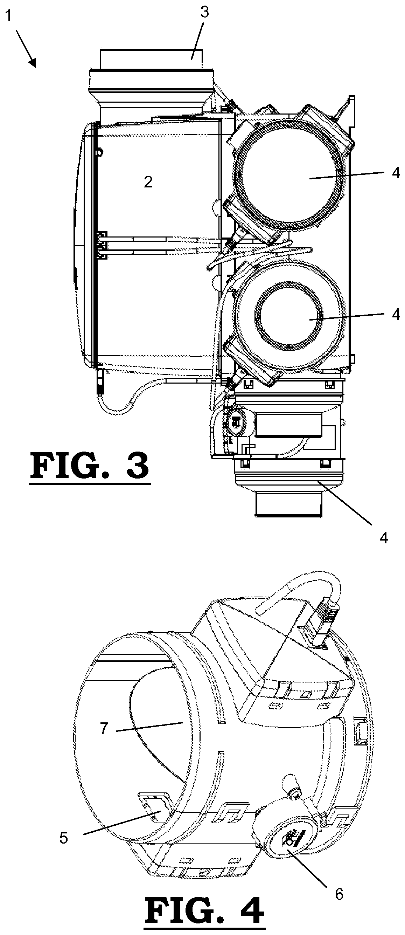

One or several of these ducts may in this case be provided with
- a flow controller (4) which has been illustrated separately in Fig. 4 and which is arranged in the fitted state in the vicinity of the respective opening in the ventilator housing (2), and
- a measuring system (5) for measuring variables of the supplied or discharged air corresponding to this flow controller (4), such as for example the CO₂ content of the air flowing through the respective duct, the relative humidity and/or the temperature of this air.

In the case of normal operation of the ventilation system, the control of the flow controller(s) (4) is preferably based on one or several of these measured parameters. In addition, the ventilation system may also be provided with an additional detection system for detecting the presence or absence of people in the respective spaces and the central electronic processing unit can also control the flow controller(s) (4) based on this presence or absence of people.

In this case, the flow controller(s) (4) preferably comprise a rotatably arranged, rigid valve leaf (7) by means of which the passage opening of the flow controller (4) can be set. The valve position of the flow controller(s) (4) is in this case controlled by an actuator, for example a stepping motor (6). In this case, this actuator (6) is preferably controlled by the central electronic processing unit of the ventilator.

According to the present invention, such a central ventilation system is furthermore provided with a presetting system (not shown) for setting the maximum passage opening for each flow controller (4). The flow controller is then also used both to preset and to adjust the ventilation system. This presetting system comprises a measuring device for carrying out measurements of the total supply or discharge flow of the ventilation system. In addition, this presetting system comprises control means (6) for setting the maximum passage opening for each flow controller (4). Furthermore, this presetting system comprises a calculation unit for calculating the flow coefficients for each flow controller (4) on the basis of the measurements of the total supply or discharge flow at various positions of the flow controllers (4). In this case, this measuring device and this calculation unit can both form part of the central electronic processing unit of the ventilator. In this case, the control means (6) comprise said actuators (6) by means of which the flow controllers (4) can be set.

According to a preferred method according to the present invention, such a central ventilation system is first installed according to the code of good practice. The nominal flow for each flow controller (4) is determined and is imposed for each flow controller (4). This may be carried out electronically or may be carried out by means of, for example, dip switches or jumpers, as is described in the patent application BE-2009/0644. Furthermore, the number of n connected flow controllers (4) is counted. This number n can either be counted manually and input into the presetting system, or can be determined automatically by this presetting system. In addition, the flow controllers (4) are initially set to their completely open position.

The discharge ventilator is set to a well-defined pressure level. For private dwellings, this will usually preferably be a pressure level between 120 and 200 Pa. Thereafter, step a of the method according to the present invention is carried out. In this case, the measuring device will first deduce the total discharge flow of the ventilation system Q₀, with all flow controllers (4) being in their maximum open position, from the capacity and the pressure level of the ventilator. Thereafter, the control means (6) in each case change the position of at least one of the flow controllers (4), following which the measuring device in each case deduces the total discharge flow Qᵢ of the ventilation system from the capacity and the pressure level of the ventilator. This is repeated until the measuring device has carried out a minimum of n+1 measurements and, for example, for passage openings of the flow controllers (4) according to the table below for a number of flow controllers (4) n = 6:

| Measurement | Valve 1 | Valve 2 | Valve 3 | Valve 4 | Valve 5 | Valve 6 | Flow |
|---|---|---|---|---|---|---|---|
| 1 | Open | Open | Open | Open | Open | Open | Q₀ |
| 2 | Open | Closed | Closed | Closed | Closed | Closed | Q₁ |
| 3 | Closed | Open | Closed | Closed | Closed | Closed | Q₂ |
| 4 | Closed | Closed | Open | Closed | Closed | Closed | Q₃ |
| 5 | Closed | Closed | Closed | Open | Closed | Closed | Q₄ |
| 6 | Closed | Closed | Closed | Closed | Open | Closed | Q₅ |
| 7 | Closed | Closed | Closed | Closed | Closed | Open | Q₆ |

In this case, open means that the respective valve leaf (7) of the corresponding flow controller (4) is placed in its maximum open position. Closed means that this valve leaf (7) is placed in its closed position, in which it allows a minimum leakage flow to pass through.

After the measurements, or already during the measurements or in between the measurements, the measuring device passes the measured values obtained with the measurements for the total discharge flow Qᵢ to the calculation unit. On the basis of these measured values, this calculation unit calculates the flow coefficients for each flow controller (4) corresponding to the required nominal flow for each flow controller.

If desired, the measurements can be repeated again for a different pressure level of the ventilator and the flow coefficients for each flow controller (4) can then be obtained by averaging the flow coefficients which are produced after each set of measurements at a certain pressure level.

On the basis of these flow coefficients, the maximum passage opening to be set for each flow controller (4) is then determined in each case. The calculation unit translates these maximum passage openings to be set into set values for setting the flow controllers (4). These set values can then be passed on to the control means (6) which, on the basis thereof, set the determined maximum passage openings of the flow controllers (4).

The required pressure level of the ventilator can then be determined on the basis of the measurements, after which the ventilator is set to this required pressure level.

This required pressure level is chosen to be as low as possible in order to guarantee a minimal consumption by the ventilation system, but sufficiently high to be able to guarantee the maximum ventilation capacities everywhere.

This required pressure level is chosen to be as low as possible in order to guarantee a minimal consumption by the ventilation system, but sufficiently high to be able to guarantee the maximum ventilation capacities everywhere.

## Claims

1. Method for presetting a central ventilation system for ventilating two or more spaces of a building comprising one or several ventilators and two or more supply and/or discharge ducts for supplying or discharging air to or from these spaces, in which two or more supply and/or discharge ducts comprise a flow controller (4) for each supply or discharge duct, in which this flow controller (4) has an adjustable passage opening, in which the maximum ventilation capacity for each supply or discharge duct is set by setting the maximum passage opening of the flow controller (4), **characterized in that** this method comprises the following steps:
a. setting the flow controllers (4) at various passage openings and performing measurements of the total supply and discharge flow of the ventilation system at said various passage openings of the flow controllers (4);
b. determining the maximum passage opening to be set for each flow controller (4) on the basis of these measurements;
c. setting the determined maximum passage opening for each flow controller (4).

2. Method according to Claim 1, **characterized in that,** at each measurement in step a, each flow controller (4) is either in an open position, in which said flow controller (4) allows a maximum flow to pass through, or in a closed position, in which said flow controller (4) allows a minimum leakage flow to pass through.

3. Method according to one of the preceding claims, **characterized in that,** in step a, at least one measurement is carried out with at least two flow controllers (4) being in their open position, in which these allow a maximum flow to pass through.

4. Method according to one of the preceding claims, **characterized in that,** in step a, at least one measurement is carried out with all flow controllers (4) being in their open position, in which these allow a maximum flow to pass through.

5. Method according to one of the preceding claims, **characterized in that** the number of measurements which is carried out in step a is at least one greater than the number of flow controllers (4).

6. Method according to one of the preceding claims, **characterized in that,** prior to step a, the nominal flow for each flow controller (4) is determined and **in that** said nominal flow is imposed for each flow controller (4).

7. Method according to one of the preceding claims, **characterized in that,** prior to step a, the pressure level of the one or several ventilators is set to a certain pressure level.

8. Method according to one of the preceding claims, **characterized in that,** following step a, the pressure level of the one or several ventilators is set to a different pressure level and **in that** step a is repeated.

9. Method according to one of the preceding claims, **characterized in that,** in step b, the flow coefficients for each flow controller (4) corresponding to the respective nominal flow are calculated on the basis of the measurements performed and **in that** the passage opening to be set for each flow controller (4) is determined on the basis of these flow coefficients.

10. Method according to one of the preceding claims, **characterized in that,** following step c, the required pressure level of the one or several ventilators is determined on the basis of the measurements and **in that** the pressure level of the one or several ventilators is set to this required pressure level.

11. Method according to Claim 9 and 10, **characterized in that** the required pressure level is determined on the basis of the calculated flow coefficients.

12. Method according to one of the preceding claims, **characterized in that,** with the measurements in step a, the total supply or discharge flow is determined on the basis of the capacity and the pressure level of the one or several ventilators.

13. Presetting system for presetting a central ventilation system for ventilating two or more spaces of a building, in which this ventilation system comprises one or several ventilators and two or more supply and/or discharge ducts for supplying or discharging air to or from these spaces, in which two or more supply and/or discharge ducts comprise a flow controller for each supply or discharge duct, in which this flow controller (4) has an adjustable passage opening, in which case the maximum ventilation capacity for each supply or discharge duct can be set by means of a flow controller (4) by setting the maximum passage opening of the flow controller (4), **characterized in that** said presetting system comprises a measuring device in order to measure the total supply or discharge flow of the ventilation system, comprises control means (6) for setting the maximum passage opening for each flow controller (4) and comprises a calculation unit for calculating the flow coefficients for each flow controller (4) on the basis of measurements of the total supply or discharge flow at different positions of the flow controllers (4).

14. Presetting system according to Claim 13, **characterized in that** said presetting system is suitable for presetting the central ventilation system according to a method according to one of Claims 1 to 12, the measuring device being designed to carry out the measurements from step a and designed to pass on measured values to the calculation unit, the control means (6) being designed to change the passage openings during step a in between the measurements, the calculation unit being designed to carry out step b with the aid of the measured values and being designed to pass on set values for setting the maximum passage opening for each flow controller (4) to the control means and the control means (6) being designed to carry out step c with the aid of the set values.

15. Central ventilation system for ventilating two or more spaces of a building comprising one or several ventilators and one or several supply and/or discharge ducts for supplying or discharging air to or from these spaces, in which two or more supply or discharge ducts comprise a flow controller (4) for each supply or discharge duct, in which this flow controller (4) has an adjustable passage opening, in which the maximum ventilation capacity for each supply or discharge duct can be set by setting the maximum passage opening of the flow controller (4), **characterized in that** said ventilation system comprises a presetting system according to Claim 13 or 14.

## Patentansprüche

1. Verfahren zum Voreinstellen einer zentralen Lüftungsanlage zum Lüften von zwei oder mehreren Räumen eines Gebäudes, die einen oder mehrere Ventilatoren und zwei oder mehrere Zufuhr- und/oder Entsorgungsleitungen zum Zuführen oder Entsorgen von Luft zu oder aus diesen Räumen umfasst, wobei die zwei oder mehreren Zufuhr- und/oder Entsorgungsleitungen eine Strömungssteuereinheit (4) für jede Zufuhr- oder Entsorgungsleitung umfassen, wobei diese Strömungssteuereinheit (4) eine einstellbare Durchflussöffnung aufweist, wobei die maximale Lüftungskapazität für jede Zufuhr- oder Entsorgungsleitung eingestellt wird, indem die maximale Durchflussöffnung der Strömungssteuereinheit (4) eingestellt wird, **dadurch gekennzeichnet, dass** dieses Verfahren die folgenden Schritte umfasst:
a. Einstellen der Strömungssteuereinheiten (4) an verschiedenen Durchflussöffnungen und Ausführen von Messungen der gesamten Zufuhr- und Entsorgungsströmung der Lüftungsanlage an den verschiedenen Durchflussöffnungen der Strömungssteuereinheiten (4);
b. Ermitteln der maximalen Durchflussöffnung, die für jede Strömungssteuereinheit (4) auf der Grundlage dieser Messungen eingestellt werden muss;
c. Einstellen der ermittelten maximalen Durchflussöffnung für jede Strömungssteuereinheit (4).

2. Verfahren nach Anspruch 1, **dadurch gekennzeichnet, dass** bei jeder Messung im Schritt a jede Strömungssteuereinheit (4) sich entweder in einer geöffneten Stellung, in der die Strömungssteuereinheit (4) den Durchfluss einer maximalen Strömung erlaubt, oder in einer geschlossenen Stellung befindet, in der die Strömungssteuereinheit (4) den Durchfluss einer minimalen Leckströmung erlaubt.

3. Verfahren nach einem der vorhergehenden Ansprüche, **dadurch gekennzeichnet, dass** im Schritt a mindestens eine Messung mit mindestens zwei Strömungssteuereinheiten (4) ausgeführt wird, die in ihrer geöffneten Stellung sind, in der sie den Durchfluss einer maximalen Strömung erlauben.

4. Verfahren nach einem der vorhergehenden Ansprüche, **dadurch gekennzeichnet, dass** im Schritt a mindestens eine Messung mit allen Strömungssteuereinheiten (4) ausgeführt wird, die in ihrer geöffneten Stellung sind, in der sie den Durchfluss einer maximalen Strömung erlauben.

5. Verfahren nach einem der vorhergehenden Ansprüche, **dadurch gekennzeichnet, dass** die Anzahl der Messungen, die im Schritt a ausgeführt werden, um mindestens eins größer ist als die Anzahl an Strömungssteuereinheiten (4).

6. Verfahren nach einem der vorhergehenden Ansprüche, **dadurch gekennzeichnet, dass** vor dem Schritt a die Nennströmung für jede Strömungssteuereinheit (4) ermittelt wird und dass jeder Strömungssteuereinheit (4) die Nennströmung aufgezwungen wird.

7. Verfahren nach einem der vorhergehenden Ansprüche, **dadurch gekennzeichnet, dass** vor dem Schritt a der Druckpegel des einen oder der mehreren Ventilatoren auf einen bestimmten Druckpegel eingestellt wird.

8. Verfahren nach einem der vorhergehenden Ansprüche, **dadurch gekennzeichnet, dass** nach dem Schritt a der Druckpegel des einen oder der mehreren Ventilatoren auf einen anderen Druckpegel eingestellt wird und dass der Schritt a wiederholt wird.

9. Verfahren nach einem der vorhergehenden Ansprüche, **dadurch gekennzeichnet, dass** im Schritt b die Strömungskoeffizienten für jede Strömungssteuereinheit (4), die der jeweiligen Nennströmung entsprechen, auf der Grundlage der ausgeführten Messungen berechnet werden und dass die Durchflussöffnung, die für jede Strömungssteuereinheit (4) einzustellen ist, auf der Grundlage dieser Strömungskoeffizienten ermittelt wird.

10. Verfahren nach einem der vorhergehenden Ansprüche, **dadurch gekennzeichnet, dass** nach dem Schritt c der erforderliche Druckpegel des einen oder der mehreren Ventilatoren auf der Grundlage der Messungen ermittelt wird und dass der Druckpegel des einen oder der mehreren Ventilatoren auf diesen erforderlichen Druckpegel eingestellt wird.

11. Verfahren nach Anspruch 9 und 10, **dadurch gekennzeichnet, dass** der erforderliche Druckpegel auf der Grundlage der berechneten Strömungskoeffizienten ermittelt wird.

12. Verfahren nach einem der vorhergehenden Ansprüche, **dadurch gekennzeichnet, dass** mit den Messungen in Schritt a die gesamte Zufuhr- oder Entsorgungsströmung auf der Grundlage der Kapazität und des Druckpegels des einen oder der mehreren Ventilatoren ermittelt wird.

13. Voreinstellungssystem zum Voreinstellen einer zentralen Lüftungsanlage zum Lüften von zwei oder mehreren Räumen eines Gebäudes, wobei diese Lüftungsanlage einen oder mehrere Ventilatoren und zwei oder mehrere Zufuhr- und/oder Entsorgungsleitungen zum Zuführen oder Entsorgen von Luft zu oder aus diesen Räumen umfasst, wobei die zwei oder mehreren Zufuhr- und/oder Entsorgungsleitungen eine Strömungssteuereinheit für jede Zufuhr- oder Entsorgungsleitung umfassen, wobei diese Strömungssteuereinheit (4) eine einstellbare Durchflussöffnung aufweist, wobei die maximale Lüftungskapazität für jede Zufuhr- oder Entsorgungsleitung mittels einer Strömungssteuereinheit (4) eingestellt werden kann, indem die maximale Durchflussöffnung der Strömungssteuereinheit (4) eingestellt wird, **dadurch gekennzeichnet, dass** das Voreinstellungssystem umfasst: eine Messvorrichtung, um die gesamte Zufuhr- oder Entsorgungsströmung der Lüftungsanlage zu messen, ein Steuerelement (6), um die maximale Durchflussöffnung für jede Strömungssteuereinheit (4) einzustellen, und eine Berechnungseinheit, um die Strömungskoeffizienten für jede Strömungssteuereinheit (4) auf der Grundlage der Messungen der gesamten Zufuhr- oder Entsorgungsströmung in unterschiedlichen Stellungen der Strömungssteuereinheiten (4) zu berechnen.

14. Voreinstellungssystem nach Anspruch 13, **dadurch gekennzeichnet, dass** das Voreinstellungssystem geeignet ist, um die zentrale Lüftungsanlage gemäß dem Verfahren nach einem der Ansprüche 1 bis 12 voreinzustellen, wobei die Messvorrichtung ausgelegt ist, um die Messungen von Schritt a auszuführen, und ausgelegt ist, um die gemessenen Werte an die Berechnungseinheit weiterzuleiten, wobei das Steuerelement (6) ausgelegt ist, um die Durchflussöffnungen während des Schritts a zwischen den Messungen zu ändern, wobei die Berechnungseinheit ausgelegt ist, um den Schritt b mit der Hilfe der gemessenen Werte auszuführen, und ausgelegt ist, um die eingestellten Werte für das Einstellen der maximalen Durchflussöffnung für jede Strömungssteuereinheit (4) an das Steuerelement weiterzuleiten, und wobei das Steuerelement (6) ausgelegt ist, um den Schritt c mit der Hilfe der eingestellten Werte auszuführen.

15. Zentrale Lüftungsanlage zum Lüften von zwei oder mehreren Räumen eines Gebäudes, die einen oder mehrere Ventilatoren und eine oder mehrere Zufuhr- und/oder Entsorgungsleitungen zum Zuführen oder Entsorgen von Luft zu oder aus diesen Räumen umfasst, wobei zwei oder mehreren Zufuhr- oder Entsorgungsleitungen eine Strömungssteuereinheit (4) für jede Zufuhr- oder Entsorgungsleitung umfassen, wobei diese Strömungssteuereinheit (4) eine einstellbare Durchflussöffnung aufweist, wobei die maximale Lüftungskapazität für jede Zufuhr- oder Entsorgungsleitung eingestellt werden kann, indem die maximale Durchflussöffnung der Strömungssteuereinheit (4) eingestellt wird, **dadurch gekennzeichnet, dass** die Lüftungsanlage ein Voreinstellungssystem nach Anspruch 13 oder 14 umfasst.

## Revendications

1. Procédé de préréglage d'un système de ventilation central permettant de ventiler au moins deux espaces d'un bâtiment comprenant un ou plusieurs ventilateurs et au moins deux conduits d'approvisionnement et/ou d'évacuation pour approvisionner en air ces espaces ou évacuer l'air de ces espaces, au moins deux conduits d'approvisionnement et/ou d'évacuation comprenant un régulateur de débit (4) pour chaque conduit d'approvisionnement ou d'évacuation, ledit régulateur de débit (4) ayant une ouverture de passage réglable, la capacité de ventilation maximale pour chaque conduit d'approvisionnement ou d'évacuation étant réglée en réglant l'ouverture de passage maximale du régulateur de débit (4), ledit procédé étant **caractérisé par** les étapes suivantes consistant à :
a. régler les régulateurs de débit (4) à diverses ouvertures de passage, et réaliser des mesures du débit d'approvisionnement et d'évacuation total du système de ventilation auxdites diverses ouvertures de passage des régulateurs de débit (4) ;
b. déterminer l'ouverture de passage maximale à régler pour chaque régulateur de débit (4) sur la base de ces mesures ;
c. régler l'ouverture de passage maximale déterminée pour chaque régulateur de débit (4).

2. Procédé selon la revendication 1, **caractérisé en ce que**, à chaque mesure réalisée à l'étape a, chaque régulateur de débit (4) est soit dans une position ouverte, dans laquelle ledit régulateur de débit (4) permet le passage d'un débit maximum, soit dans une position fermée, dans laquelle ledit régulateur de débit (4) permet le passage d'un débit de fuite minimum.

3. Procédé selon l'une quelconque des revendications précédentes, **caractérisé en ce que**, à l'étape a, au moins une mesure est réalisée avec au moins deux régulateurs de débit (4) en position ouverte permettant le passage d'un débit maximum.

4. Procédé selon l'une quelconque des revendications précédentes, **caractérisé en ce que**, à l'étape a, au moins une mesure est réalisée avec tous les régulateurs de débit (4) en position ouverte permettant le passage d'un débit maximum.

5. Procédé selon l'une quelconque des revendications précédentes, **caractérisé en ce que** le nombre de mesures réalisées à l'étape a est supérieur d'au moins un au nombre de régulateurs de débit (4).

6. Procédé selon l'une quelconque des revendications précédentes, **caractérisé en ce que**, avant l'étape a, le débit nominal de chaque régulateur de débit (4) est déterminé, et **en ce que** ledit débit nominal est imposé pour chaque régulateur de débit (4).

7. Procédé selon l'une quelconque des revendications précédentes, **caractérisé en ce que**, avant l'étape a, le niveau de pression du ou des ventilateurs est réglé à un certain niveau de pression.

8. Procédé selon l'une quelconque des revendications précédentes, **caractérisé en ce que**, après l'étape a, le niveau de pression du ou des ventilateurs est réglé à un niveau de pression différent, et **en ce que** l'étape a est répétée.

9. Procédé selon l'une quelconque des revendications précédentes, **caractérisé en ce que**, à l'étape b, les coefficients de débit de chaque régulateur de débit (4) correspondant au débit nominal respectif sont calculés sur la base des mesures réalisées, et **en ce que** l'ouverture de passage à régler pour chaque régulateur de débit (4) est déterminée sur la base de ces coefficients de débit.

10. Procédé selon l'une quelconque des revendications précédentes, **caractérisé en ce que**, après l'étape c, le niveau de pression requis du ou des ventilateurs est déterminé sur la base des mesures, et **en ce que** le niveau de pression du ou des ventilateurs est réglé sur ce niveau de pression requis.

11. Procédé selon les revendications 9 et 10, **caractérisé en ce que** le niveau de pression requis est déterminé sur la base des coefficients de débit calculés.

12. Procédé selon l'une quelconque des revendications précédentes, **caractérisé en ce que**, avec les mesures réalisées à l'étape a, le débit d'approvisionnement ou d'évacuation total est déterminé sur la base de la capacité et du niveau de pression du ou des ventilateurs.

13. Système de préréglage permettant de prérégler un système de ventilation central permettant de ventiler au moins deux espaces d'un bâtiment, ledit système de ventilation comprenant un ou plusieurs ventilateurs et au moins deux conduits d'approvisionnement et/ou d'évacuation pour approvisionner en air ces espaces ou évacuer l'air de ces espaces, au moins deux conduits d'approvisionnement et/ou d'évacuation comprenant un régulateur de débit pour chaque conduit d'approvisionnement ou d'évacuation, ledit régulateur de débit (4) ayant une ouverture de passage réglable, la capacité de ventilation maximale pour chaque conduit d'approvisionnement ou d'évacuation pouvant être réglée au moyen d'un régulateur de débit (4) en réglant l'ouverture de passage maximale du régulateur de débit (4), ledit système de préréglage étant **caractérisé en ce qu'**il comprend un dispositif de mesure permettant de mesurer le débit d'approvisionnement ou d'évacuation total du système de ventilation, un moyen de régulation (6) permettant de régler l'ouverture de passage maximale pour chaque régulateur de débit (4), et une unité de calcul permettant de calculer les coefficients de débit pour chaque régulateur de débit (4) sur la base des mesures du débit d'approvisionnement ou d'évacuation total à différentes positions des régulateurs de débit (4).

14. Système de préréglage selon la revendication 13, **caractérisé en ce que** ledit système de préréglage convient au préréglage du système central de ventilation selon un procédé selon l'une quelconque des revendications 1 à 12, le dispositif de mesure étant conçu pour réaliser les mesures de l'étape a et pour transmettre les valeurs mesurées à l'unité de calcul, le moyen de régulation (6) étant conçu pour faire varier les ouvertures de passage pendant l'étape a entre les mesures, l'unité de calcul étant conçue pour réaliser l'étape b à l'aide des valeurs mesurées, et pour transmettre au moyen de régulation des valeurs de consigne pour régler l'ouverture de passage maximale de chaque régulateur de débit (4), et le moyen de régulation (6) étant conçu pour réaliser l'étape c à l'aide des valeurs de consigne.

15. Système de ventilation central permettant de ventiler au moins deux espaces d'un bâtiment comprenant un ou plusieurs ventilateurs et un ou plusieurs conduits d'approvisionnement et/ou d'évacuation pour approvisionner en air ces espaces ou évacuer l'air de ces espaces, au moins deux conduits d'approvisionnement ou d'évacuation comprenant un régulateur de débit (4) pour chaque conduit d'approvisionnement ou d'évacuation, ledit régulateur de débit (4) ayant une ouverture de passage réglable, la capacité de ventilation maximale pour chaque conduit d'approvisionnement ou d'évacuation pouvant être réglée en réglant l'ouverture de passage maximale du régulateur de débit (4), ledit système de ventilation étant **caractérisé en ce qu'**il comprend un système de préréglage selon la revendication 13 ou 14.
